# EUROPEAN PATENT APPLICATION

(11) **EP 4 597 885 A1**
(43) Date of publication of application: **06.08.2025**
(21) Application number: 24154566.4
(22) Date of filing: 30.01.2024
(51) Int. Cl.: H04B 17/23, G06N 3/044, G06N 20/00, H04B 17/309

(54) **SYSTEM AND METHOD FOR GENERATING IMAGES OF RF SIGNALS AND/OR RF IMPAIRMENTS**

(71) Applicant: Rohde & Schwarz GmbH & Co. KG, 81671 München (DE)
(72) Inventor: Guezelarslan, Baris, Dr.-Ing., 85521 Ottobrunn (DE)
(74) Representative: Rupp, Christian

(57) **Abstract**

The disclosure relates to a system (10) for generating images of RF signals and/or RF impairments. The system (10) comprises: a receiving unit (11) configured to receive information on a number of RF signals and/or RF impairments, and image parameters; one or more RF signal generators (12) configured to generate the number of RF signals and/or RF impairments according to the received information; an image generation unit (13) configured to generate an image of a frequency spectrum and/or a spectrogram of the generated RF signals and/or RF impairments according to the received image parameters; a calculation unit (14) configured to calculate a respective bounding box for at least one of the RF signals and/or for at least one of the RF impairments in the generated image, wherein the bounding box indicates a location of the at least one RF signal and/or the at least one RF impairment in the generated image; and a memory (15) configured to store the generated image together with the bounding box(es).

## Description

### TECHNICAL FIELD

In general, the present disclosure relates to labelling of radio frequency (RF) data. More specifically, the present disclosure relates to a system and a method for generating images of RF signals and/or RF impairments.

### BACKGROUND

Labelled images of RF signals (e.g., images of frequency spectra or spectrograms) are required for different applications, e.g. as reference or training data.

For example, an image label should indicate a classification of the RF signals in the image or should highlight certain areas of interest in the image, e.g., the location of specific signals or signal components.

Typically, a user has to "label" such image data manually after image generation. For instance, the user first records an image of an RF signal and then uses his expert knowledge to label the image by adding a classification or by highlighting specific areas in the image. This can be a cumbersome and time-consuming task, especially if a large amount of labelled RF images is required or if the images show a multitude of superimposed signals with additional impairments.

### SUMMARY

Thus, it is an objective to provide an improved system and method for generating images of RF signals and/or RF impairments which avoid the above-mentioned disadvantages.

The objective is achieved by the solution provided in the enclosed independent claims. Advantageous implementations of the present disclosure are further defined in the dependent claims.

According to a first aspect, the present disclosure relates to a system for generating images of radio frequency (RF) signals and/or RF impairments. The system comprises: a receiving unit configured to receive information on a number of RF signals and/or RF impairments, and to receive image parameters. The system further comprises: one or more RF signal generators configured to generate the number RF signals and/or RF impairments according to the received information; an image generation unit configured to generate an image of a frequency spectrum and/or a spectrogram of the generated RF signals and/or RF impairments according to the received image parameters; a calculation unit configured to calculate a bounding box for at least one of the RF signals and/or for at least one of the RF impairments in the generated image, wherein the bounding box indicates a location of the respective RF signal and/or RF impairment in the generated image; and a memory configured to store the generated image together with the bounding box.

This achieves the advantage that images of RF signals with impairments can be directly labeled by the system when they are generated. No expert knowledge during a subsequent "labelling" is required, as the system knows which RF signals and/or RF impairments it is generating.

The number RF signals and/or RF impairments can comprise at least one RF signal and/or at least one RF impairment. The calculation unit can calculated one or more bounding boxes, wherein each bounding box indicates the location of a respective RF signal and/or a respective RF impairment in the image.

In particular, the calculation unit is configured to calculate the bounding box(es) automatically during or directly after the generation of the image.

The image can be generated in any suitable image file format, e.g. a raster graphics format such as PNG or JPEG.

The bounding box(es) can be part of an image label of the image. For instance, the bounding box(es) are calculated and/or stored in the form of coordinates in the generated image, e.g. pixel coordinates in case the image is a pixelated image.

The number of RF impairments can comprise impairments that are related to at least one of the RF signals (e.g., an attenuation or interference of the signal) and/or impairments that are unrelated to the individual RF signal(s) (e.g., general noise or broadband distortion).

The received information can be or can comprise signal parameters which define the number of RF signals and/or RF impairments. For instance, information on at least one RF signal and at least one RF impairment can be received, and the at least one RF signal and at least one RF impairment can be generated in parallel.

The system can be realized as a single device with a housing, wherein at least the receiving unit, the RF signal generators, the calculation unit, and the memory are arranged in or on the housing.

The receiving unit can be or can comprise one or more interfaces. For instance, the receiving unit can comprise one interface for receiving the information on the RF signals/impairments and a further interface for receiving the image parameters.

In an embodiment, the bounding box indicates a frequency and/or time range of the respective RF signal and/or RF impairment in the image.

For instance, the bounding box(es) can be frequency-time windows in a spectrogram. The bounding box(es) can be displayed in the image.

In an embodiment, the memory is configured to further store at least a part of the received information and/or the received image parameters together with the image.

For instance, the received information and/or image parameters can be stored as image classification information in an image label of the image.

In an embodiment, the memory is configured to store the image and the bounding box in an encrypted manner. Furthermore, the memory can also store the received information and/or the received image parameters (i.e., the entire image label) in the encrypted manner.

In an embodiment, the system further comprises an image processing unit configured to further manipulate the generated image based on the image parameters. For instance, a resolution or a color coding in the image can be adjusted in this way.

In an embodiment, the receiving unit is configured to receive the information on the number of RF signals and/or RF impairments from at least one of: a graphical user interface, a random signal generator, a database with sorted signal profiles, and a descriptive list of signal profiles.

Each of the graphical user interface, the random signal generator, the database, and the list of signal profiles can be a component of the system or an external component. The receiving unit (e.g., an interface) can communicatively connect each of these components to the signal generator(s), the image generation unit and/or the calculation unit.

In an embodiment, the information on the number of RF signals and/or RF impairments comprises at least one of: a type of the RF signals and/or RF impairments, a temporal behavior of the RF signals and/or RF impairments, a frequency behavior of the of RF signals and/or RF impairments, and a level behavior of the RF signals and/or RF impairments.

For example, the type of the RF signal may comprise at least one of: modulation type, transmission system, and further classification information. The type of the RF impairment may comprise: an impairment which is related to the RF signal(s) (e.g., attenuation, interference) or an impairment which is unrelated to the individual RF signal(s) (e.g., general noise or broadband distortion).

The temporal behavior may comprise at least one of: on-off-time, start/stop time, and continuous wave behavior of the signal and/or impairment. The frequency behavior may comprise at least one of: frequency hopping, frequency shift, chirp, fixed or variable center frequency, start/stop frequency, and frequency bandwidth of the signal and/or impairment. The level behavior can comprise a signal-to-noise ratio (SNR) and/or a fading (e.g., defined by a fading profile) of the RF signal and/or impairment.

In an embodiment, the image parameters comprise at least one of: a number of frequency bins in the image, a number of time bins in the image, a storage format for the image, and a storage location for the image.

The frequency and time bins can define the number of individual frequency and time steps (e.g., rows/columns) in the image. For example, one time bin results in a spectrum, more time bins result in a spectrogram. Thus, the image and time bins can define a frequency and/or time resolution of the image.

In an embodiment, the system further comprises an output interface configured to transmit the stored image and the bounding box to an external device.

In an embodiment, the one or more RF signal generators comprise at least one fading generator configured to generate at least one of the RF impairments.

In an embodiment, the system comprises a plurality of RF signal generators which are arranged in a cascaded manner, and which are configured to generate the number of RF signals and/or RF impairments in parallel. This achieves the advantage that a complex superposition of a variety of different RF signals and/or RF impairments can be generated.

In an embodiment, the one or more RF signal generators comprise a pulse sequencer which is configured to generate at least one of the RF signals in the form of a radar pulse. This achieves the advantage that an image which shows a realistic radar scenario can be generated.

In an embodiment, the system comprises a training unit which is configured to use the generated image and the bounding box as training data for training an AI algorithm.

According to a second aspect, the present disclosure relates to a method for generating images of RF signals. The method comprises: receiving information on a number of RF signals and/or RF impairments, and on image parameters; generating the number of RF signals and/or RF impairments according to the received information; generating an image of a frequency spectrum and/or a spectrogram of the generated RF signals and/or RF impairments according to the received image parameters; calculating a bounding box for at least one of the RF signals and/or for at least one of the RF impairments in the generated image, wherein the bounding box indicates a location of the respective RF signal and/or RF impairment in the generated image; and storing the generated image together with the bounding box.

The method according to the second aspect of the disclosure can be carried out by the system according to the first aspect of the disclosure.

According to a third aspect, the present disclosure relates to the use of the image and the bounding box generated with the method according to the second aspect of the disclosure for training an AI algorithm.

### BRIEF DESCRIPTION OF THE DRAWINGS

The above described aspects and implementations are explained in the following description of embodiments with respect to the enclosed drawings:
- Fig. 1: shows a schematic diagram system for generating images of RF signals and/or RF impairments according to an embodiment;
- Fig. 2: shows a working principle of the system shown in Fig. 1 according to an embodiment;
- Fig. 3: shows a labeled image of an RF spectrogram according to an embodiment; and
- Fig. 4: shows a flow diagram of a method for generating images of RF signals and/or RF impairments according to an embodiment.

### DETAILED DESCRIPTION OF EMBODIMENT

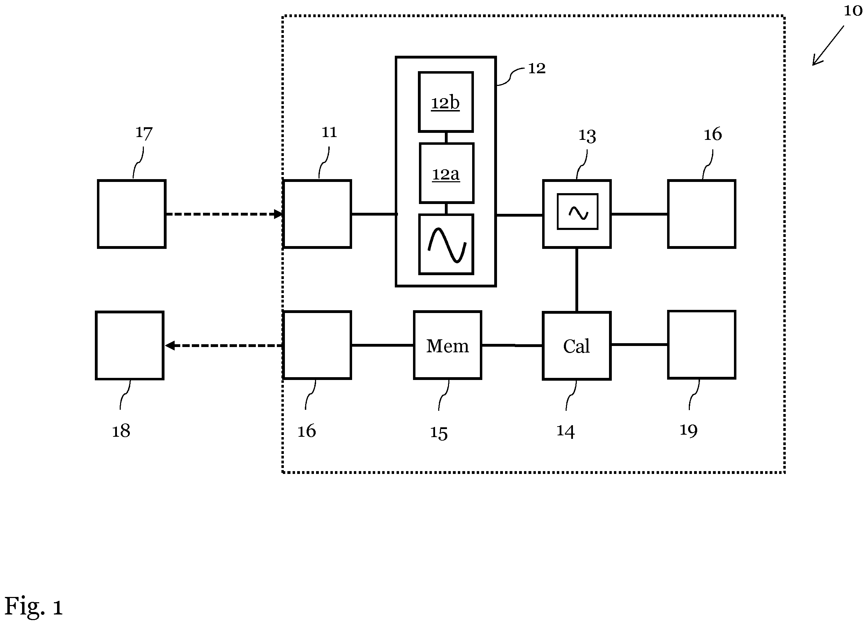

Fig. 1 shows a schematic diagram system 10 for generating images of RF signals and/or RF impairments according to an embodiment.

The system 10 comprises a receiving unit 11 configured to receive: information on a number of RF signals and/or RF impairments, and image parameters. The system 10 further comprises one or more RF signal generators 12 configured to generate the number of RF signals and/or RF impairments according to the received information; an image generation unit 13 configured to generate an image of a frequency spectrum and/or a spectrogram of the generated RF signals and/or RF impairments according to the received image parameters; and a calculation unit 14 configured to calculate a bounding box for at least one of the RF signals and/or for at least one of the RF impairments in the generated image, wherein the bounding box indicates a location of the respective RF signal and/or RF impairment in the generated image. The system 10 further comprises a memory 15 configured to store the generated image together with the bounding box(es).

The calculation unit 14 can be configured to calculate the bounding box (or bounding boxes) during or directly after the generation of the image by the image generation unit. The calculation of the bounding box(es) can be carried out automatically by the system 10 or more specifically by the image generation unit 13. In particular, no user input is required after image generation to trigger the bounding box calculation.

The image generation unit 13 and/or the calculation unit 14 can be implemented by a processor of the system 10, e.g., a microprocessor.

The memory 15 can be configured to further store at least a part of the received information and/or the received image parameters together with the image. This information can form an image classification and can also be stored in the image label.

The memory 15 can be configured to store the image and/or the label (e.g., bounding box(es) and/or received information respectively image parameters) in an encrypted manner. In this way, it can be ensured that only an approved hardware can access and use the labeled image data.

For instance, the memory 15 is a flash memory. The receiving unit 11 can be an interface.

In an example, the receiving unit 11 is configured to receive the information on the number of RF signals and/or RF impairments from at least one of the following components 17: a graphical user interface, a random signal generator, a database with sorted signal profiles, and a descriptive list of signal profiles. In general, the components 17 can comprise a unit for describing the desired RF signal(s) and/or RF impairment(s) .

Each of these components 17 (i.e., graphical user interface, the random signal generator, the database, and/or the list of signal profiles) can be a component of the system 10 or can be an external component which is connected to the receiving unit 11.

In case the component 17 comprises a graphical user interface (GUI), the receiving unit 11 can further receive the image parameters from this GUI. For instance, the GUI can be a touchscreen display of the system 10.

For instance, the random signal generator can forward information on random RF signals and/or impairments to the receiving unit 11, such that the system 10 generates images of randomized RF spectra or spectrograms (data augmentation). In this way, a large number of labeled images of RF signals can be generated, which can e.g. be used as training data for AI or ML algorithms.

The database and/or descriptive list can forward the information on the RF signal and RF impairments in the form of signal profiles. For instance, a user can select specific signal profiles from the database and/or list to be generated by the RF signal generator(s) 12. The database and/or list can thereby be stored in the memory 15 or in a separate memory of the system 10.

Optionally, the system 10 further comprise an image processing unit 16 configured to further manipulate the generated image based on the image parameters. For instance, a resolution or a color coding in the image can be adjusted by the image processing unit 16.

The system 10 may further comprises an output interface 16 configured to transmit the stored image and the bounding box(es) to an external device 18.

Thereby, also the stored parts of the received information and/or image parameters (i.e., the entire image label) can be transmitted. The output interface 16 is e.g. a USB or Ethernet interface.

The system 10 can further comprise a plurality of the RF signal generators 12 which are arranged in a cascaded manner. In this way, two or more RF signals and/or signal impairments can be generated in parallel. For instance, the signal generation can be split between the plurality of RF signal generators to achieve an orchestration of the RF signal generation.

Each of the RF signal generators 12 can be analog or digital signal generator. The RF signal generators 12 can be implemented in hardware (such as R&S^{®}SMW200A) and/or in software (such as R&S^{®}WinIQSIM2^{™}). Thus, a purely digital generation of the data is also possible.

Optionally, the RF signal generators can comprise at least one pulse sequencer 12a which is configured to generate at least one of the RF signals in the form of a radar pulse. In this case, the information can comprise compressed descriptions of analyzed pulses, so called pulse descriptor words (PDW) which define the radar signals.

A PDW pulse description may refer to a source-coded digital signal description. A PDW pulse description may represent a number of pulses. For each represented pulse, information such as time of arrival (ToA), frequency offset, amplitude offset, pulse duration and modulation parameters can be provided. Custom edge shapes and/or repetitive pulse bursts may be represented as well. Based on this information, an I/Q waveform segment or an analog RF pulse may be generated for each represented pulse.

In addition or alternatively, the one or more RF signal generators can comprise at least one fading generator 12b. The fading generator 12b can be configured to generate at least one of the RF impairments.

For instance, the RF impairments can comprise impairments that are related to at least one of the RF signals (e.g., a signal attenuation or interference) and/or impairments that are unrelated to the individual RF signal(s) (e.g., general noise or broadband distortion).

The system 10 can be a single device, e.g. a RF signal generator device, which comprises a housing, wherein the components 11-16 and optionally also component 17 are arranged in or on the housing.

Further optionally, the system 10 may comprise a training unit 19 which is configured to use the generated image and the bounding box(es) as training data for training an AI (artificial intelligence) or ML (machine learning) algorithm. The training unit 19 can also use additional classification information (e.g., stored information on the RF signals/impairments or image parameters) for the training, if this information is stored in the image label together with the bounding box(es).

For instance, the AI algorithm can be trained to detect the RF signals and/or impairments, which are highlighted by the bounding boxes in the training images, in other images of frequency spectra or spectrograms.

The training unit 19 can be implemented as hardware and/or software (e.g., online). The training unit 19 can provide a training environment.

For instance, the training unit 19 can be integrated as a hardware component in a housing of the system 10 (e.g., if the system is a single device), such that the AI algorithm can be trained directly in the device and no data leaves the device during training.

The thus trained AI algorithm (e.g., a trained neural network) can be implemented in a receiver or spectrum analyzer for detecting certain RF signals and/or impairments.

The training unit 19 and/or the image processing unit 16 can each be implemented by a processor or processing unit of the system 10, e.g. the same processor that implements the image generation unit 13 and/or the calculation unit 14.

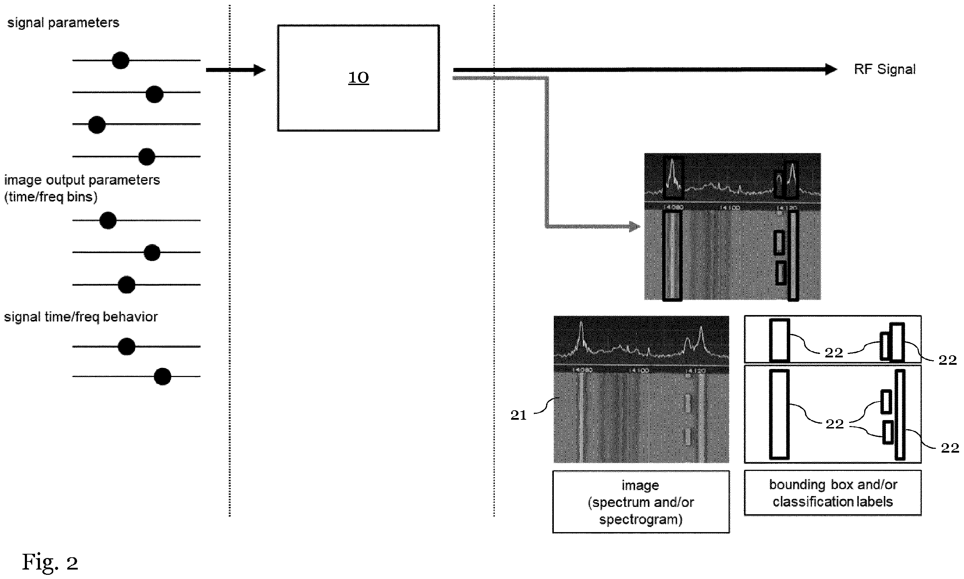

Fig. 2 shows a working principle of the system 10, as e.g. shown in Fig. 1, according to an embodiment.

As shown on the left part of Fig. 1, the system 10 receives various information on RF signal and/or RF impairments and image parameters.

The information on the RF signals and/or impairments can comprise signal parameters which define the RF signal and/or RF impairments. For instance, the information comprises: a type, a temporal behavior, a frequency behavior, a level behavior and/or further characteristics of the RF signals and/or impairments.

The type of the RF signal may comprise at least one of: modulation type, transmission system, and further classification information. The type of the RF impairment may comprise: an impairment which is related to the RF signal(s) (e.g., attenuation) or an impairment which is unrelated to the individual RF signal(s) (e.g., general noise or broadband distortion).

The temporal behavior may comprise at least one of: on-off-time, start/stop time, and continuous wave of the signal and/or impairment. The frequency behavior may comprise at least one of: frequency hopping, frequency shift, chirp, fixed or variable center frequency, start/stop frequency, and frequency bandwidth of the signal and/or impairment. The level behavior can comprise a signal-to-noise ratio (SNR) and/or fading (e.g., provided by a fading profile) of the RF signal and/or impairment.

The image parameters can comprise at least one of: a number of frequency bins in the resulting image, a number of time bins in the resulting image, a storage format for the image, and a storage location for the image and the image label (e.g., bounding box(es), classification information etc.).

The frequency and time bins can define the number of individual frequency and time steps (e.g., rows/columns) in the image. For example, one time bin results in a spectrum, more time bins result in a spectrogram. Thus, the image and time bins can define a frequency and/or time resolution of the image.

For instance, the information on the RF signals/impairments and the image parameters can be input by a user on a graphical user interface of the system 10.

As seen in the right part of Fig. 2, the system 10 generates the RF signals and/or impairments according to the received information, and at least one image of the generated signals/impairments. The image can be an image of a frequency spectrum or a spectrogram. A spectrogram shows a temporal behavior of a frequency spectrum, i.e., a change of the frequency spectrum over time. For instance, in a spectrogram the x-axis indicates the frequency and the y-axis indicates the time, wherein the signal intensity can be depicted by a color coding.

Furthers, as shown in Fig. 2, the system 10 can generate an image 21 of a spectrogram of the RF signal (s) /impairment (s) . In the example shown in Fig. 2, the image 21 further contains a frequency spectrum at a selected time in the spectrogram. However, showing such a frequency spectrum in addition to a spectrogram is purely optional. For example, the exact appearance and contents of the image(s) 21 generated by the image generation unit 13 can be selected by a user via the image parameters.

The image (s) 21 can be generated in any suitable image file format, e.g. a raster graphics format such as PNG or JPEG. This could also be set by the image parameters.

The system 10 or more specifically the calculation unit 14 further calculates at least one bounding box 22 for at least one of the RF signals and/or impairments in the image. In the example, shown in Fig. 2, bounding boxes 22 are calculated for a number of signals in the spectrogram and for the corresponding signals in the frequency spectrum.

The bounding box(es) 22 can indicate(s) a frequency and/or time range of the at least one RF signal and/or the at least one RF impairment in the generated image. For instance, the bounding boxes 22 are displayed as frames around the corresponding locations of the signals/impairments in the image 21.

It can be set by a user, e.g., via the image parameters, for which signals and/or impairments a respective bounding box is calculated. Alternatively, the system 10 can automatically calculate bounding box(es) for all signals and/or all impairments in the image 21.

For instance, the bounding box(es) 22 are calculated and/or stored in the form of coordinates in the generated image 21, e.g. pixel coordinates in case the image is a pixelated image. The bounding box(es) 22 can be part of the image label of the image 21, wherein the image label can be stored as a data file alongside the image 21 in the memory 15. The image label can comprise further image classification information (e.g., at least some of the information on the RF signals/impairments and/or the image parameters). The information in this image label can be used alongside the image 21 itself for training an AI or ML algorithm.

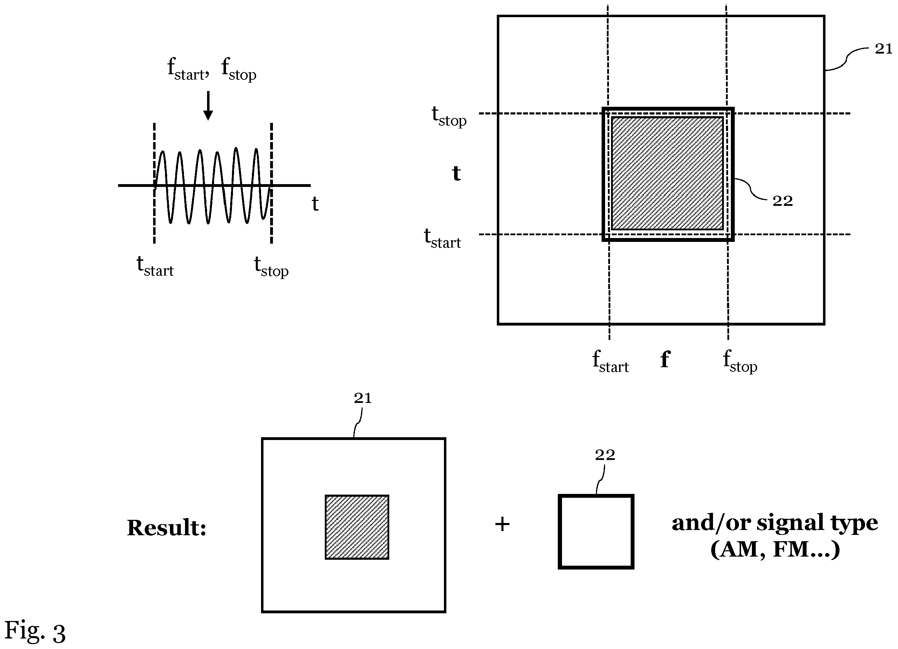

Fig. 3 shows a labeled image 21 of an RF spectrogram according to an embodiment. In this spectrogram, the x-axis shows the frequency and the y-axis shows the time.

The appearance of the spectrogram in the image (e.g., number of frequency/time bins) can be defined via the image parameters (e.g., by a "define canvas" function of the system 10) .

The system can generate at least one RF signal, which is shown in the top left of Fig. 3. The signal can be generated with a specific temporal behavior (e.g., with start time tₛₜₐᵣₜ and stop time tₛₜₒₚ). Furthermore, the bandwidth of the at least one signal (e.g., start frequency fₛₜₐᵣₜ and stop frequency fₛₜₒₚ) can be determined or read out.

By knowing these signal parameters tₛₜₐᵣₜ, tₛₜₒₚ, fₛₜₐᵣₜ, fₛₜₒₚ, the system 10 can locate the signal in the spectrogram image 21. In the example shown in Fig. 3, the signal location is highlighted by a shaded square in the image 21.

The system 10 can then label the image 21 of the spectrogram with bounding box 22 around the signal location. The label can further comprise information on the signal type (e.g., AM or FM signal, etc.).

As a result, a spectrogram image 21 and a corresponding label (containing at least the bounding box 22 and/or signal type information) can be provided.

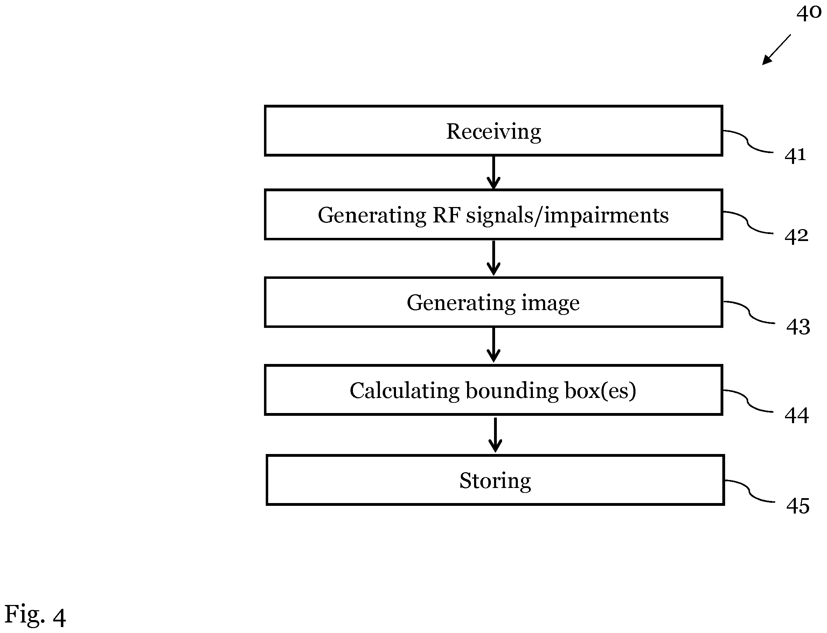

Fig. 4 shows a flow diagram of a method 40 for generating images of RF signals and/or RF impairments according to an embodiment. For instance, the method 40 can be carried out with the system as e.g. shown in Fig. 1.

The method 40 comprises the steps of: receiving 41 the information on the number of RF signals and/or RF impairments and on the image parameters; generating 42 the number of RF signals and/or RF impairments according to the received information; generating 43 the image of the frequency spectrum and/or the spectrogram of the generated RF signals and/or RF impairments according to the received image parameters; calculating 44 a bounding box for at least one of the RF signals and/or for at least one of the RF impairments in the generated image, wherein the bounding box indicates a location of the respective RF signal and/or RF impairment in the generated image; and storing 45 the generated image together with the bounding box (or bounding boxes if more than one is calucated).

For example, the image and the bounding box(es) as well as further information from an image label (e.g., classification information) generated with the above method 40 can be used for training an AI algorithm.

## Claims

1. A system (10) for generating images of RF signals and/or RF impairments, comprising:
a receiving unit (11) configured to receive:
- information on a number of RF signals and/or RF impairments, and
- image parameters;
one or more RF signal generators (12) configured to generate the number of RF signals and/or RF impairments according to the received information;
an image generation unit (13) configured to generate an image of a frequency spectrum and/or a spectrogram of the generated RF signals and/or RF impairments according to the received image parameters;
a calculation unit (14) configured to calculate a bounding box for at least one of the RF signals and/or for at least one of the RF impairments in the generated image, wherein the bounding box indicates a location of the respective RF signal and/or RF impairment in the generated image; and
a memory (15) configured to store the generated image together with the bounding box.

2. The system (10) of claim 1,
wherein the bounding box indicates a frequency and/or time range of the respective RF signal and/or RF impairment in the image.

3. The system (10) of claim 1 or 2,
wherein the memory (15) is configured to further store at least a part of the received information and/or the received image parameters together with the image.

4. The system (10) of any one of the preceding claims,
wherein the memory (15) is configured to store the image and the bounding box in an encrypted manner.

5. The system (10) of any one of the preceding claims,
an image processing unit (16) configured to further manipulate the generated image based on the image parameters.

6. The system (10) of any one of the preceding claims,
wherein the receiving unit (11) is configured to receive the information on the number of RF signals and/or RF impairments from at least one of: a graphical user interface, a random signal generator, a database with sorted signal profiles, and a descriptive list of signal profiles.

7. The system (10) of any one of the preceding claims,
wherein the information on the number of RF signals and/or RF impairments comprises at least one of: a type of the RF signals and/or RF impairments, a temporal behavior of the RF signals and/or RF impairments, a frequency behavior of the of RF signals and/or RF impairments, and a level behavior of the RF signals and/or RF impairments.

8. The system (10) of any one of the preceding claims,
wherein the image parameters comprise at least one of: a number of frequency bins in the image, a number of time bins in the image, a storage format for the image, and a storage location for the image.

9. The system (10) of any one of the preceding claims, further comprising:
an output interface (16) configured to transmit the stored image and the bounding box to an external device.

10. The system (10) of any one of the preceding claims,
wherein the one or more RF signal generators (12) comprise at least one fading generator (12b) configured to generate at least one of the RF impairments.

11. The system (10) of any one of the preceding claims,
wherein the system comprises a plurality of RF signal generators (12) which are arranged in a cascaded manner, and which are configured to generate the RF signals and/or RF impairments in parallel.

12. The system (10) of any one of the preceding claims,
wherein the one or more RF signal generators (12) comprise a pulse sequencer (12a) which is configured to generate at least one of the RF signals in the form of a radar pulse.

13. The system (10) of any one of the preceding claims, further comprising:
a training unit (19) which is configured to use the generated image and the bounding box as training data for training an AI algorithm.

14. A method (40) for generating images of RF signals and/or RF impairments, comprising:
receiving (41) information on a number of RF signals and/or RF impairments, and on image parameters;
generating (42) the number of RF signals and/or RF impairments according to the received information;
generating (43) an image of a frequency spectrum and/or a spectrogram of the generated RF signals and/or RF impairments according to the received image parameters;
calculating (44) a bounding box for at least one of the RF signals and/or for at least one of the RF impairments in the generated image, wherein the bounding box indicates a location of the respective RF signal and/or RF impairment in the generated image; and
storing (45) the generated image together with the bounding box.

15. Use of the image and the bounding box generated with the method (40) of claim 14 for training an AI algorithm.
